# EUROPÄISCHE PATENTANMELDUNG

(11) **EP 2 461 138 A1**
(43) Veröffentlichungstag der Anmeldung: **06.06.2012**
(21) Anmeldenummer: 10015254.5
(22) Anmeldetag: 03.12.2010
(51) Int. Cl.: G01D 18/00, H03K 17/945

(54) **Sensor mit einem Teach-in-Schalter sowie Verfahren zum Einleiten eines Teach-in-Vorgangs**

(71) Anmelder: Baumer Innotec AG, 8500 Frauenfeld (CH)
(72) Erfinder: Brändl, Daniel, CH-8500 Frauenfeld (CH); Reetmeyer, Burkhard, DE-78465 Konstanz (DE); Hafner, Ueli, CH-8413 Neftenbach (CH)
(74) Vertreter: Strauss, Steffen

(57) **Zusammenfassung**

Die Erfindung betrifft einen Sensor mit einem Teach-In-Schalter, wobei als Teach-In-Schalter ein induktiver Sensor verwendet wird.

## Beschreibung

### Gebiet der Erfindung:

Die Erfindung betrifft einen Sensor mit einem Teach-in-Schalter sowie einer optischen Anzeige, um den eingeleiteten Teach-in-Modus sichtbar zu machen. Weiter betrifft die Erfindung ein Verfahren zum Einleiten eines Teach-in-Vorgangs.

### Hintergrund der Erfindung:

Es ist bekannt, Sensoren, insbesondere optische Sensoren, kapazitive und induktive Sensoren wie Näherungsschalter, Füllstandssensoren und Drehgeber nach dem Einbau anzulernen. Ein solcher Vorgang wird gemeinhin als Teach-in bezeichnet. Dabei wird beispielsweise ein Füllstandssensor in der Position "leer" und in der Position "voll" kalibriert, um sodann, sofern dieser als analoger Sensor ausgebildet ist, den Füllstand anzugeben, beziehungsweise, sofern der Sensor als Schwellwertschalter ausgebildet ist, bei vollem oder leerem Tank ein auswertbares Signal zu geben.

Aus der Praxis ist bekannt, den Teach-in-Vorgang über eine Schnittstelle, an welche der Sensor angeschlossen wird, einzuleiten. Dies hat den Vorteil, dass der Sensor über die Schnittstelle auch parametrierbar ist. Gleichzeitig ist aber zum einen hardwareseitig die Bereitstellung der Schnittstelle relativ aufwendig und in vielen Anwendungsfällen ist es auch aufwendig, dass der Sensor angeschlossen werden muss.

Es gibt weiter Sensoren, die nach Herstellung einer Stromversorgung zunächst automatisch in ein Teach-in-Modus schalten. Nachteilig hierbei ist, dass ein manuelles Einleiten des Teach-in-Modus nur durch Unterbrechung der Stromversorgung möglich ist. Weiterhin ist es kaum möglich, manuell in verschiedene Teach-in-Modi beispielsweise "voll" und "leer" zu schalten.

In der Praxis verbreitet sind daher Sensoren mit einem Teach-in-Schalter und einer optischen Anzeigeeinrichtung. Durch manuelles Drücken des Schalters kann der Sensor in einen Teach-in-Modus versetzt werden, der wiederum über eine optische Anzeigeeinrichtung, wie eine blinkende LED, angezeigt wird. Dieses System hat den Vorteil einer relativ einfachen Handhabung und über beispielsweise unterschiedlich lange Betätigungszeiten des Schalters kann der Sensor in verschiedene Teach-in-Modi versetzt werden, wobei diese beispielsweise über ein unterschiedliches Blinksignal auch vom Benutzer leicht unterschieden werden können.

Nachteilig ist aber, dass für einen derartigen Schalter zumeist anfällige mechanische Komponenten erforderlich sind, insbesondere muss bei Sensoren, welche hermetisch gekapselt sind, der Schalter abgedichtet werden. Dies kann beispielsweise mit einer Gummikappe erfolgen. Auch dies ist aufwendig und aufgrund des Alterungsprozesses von den verwendeten elastomeren Werkstoffen kann es zu Undichtigkeiten und damit zur Zerstörung des Sensors kommen.

### Aufgabe der Erfindung:

Der Erfindung liegt demgegenüber die Aufgabe zugrunde, die genannten Nachteile des Standes der Technik zumindest zu reduzieren.

Insbesondere ist es eine Aufgabe der Erfindung, einen Teach-in-Schalter bereit zu stellen, welcher ohne mechanische Komponenten auskommt und im Gehäuse des Sensors integriert werden kann, ohne dass ein gesondertes Fenster oder eine Kappe am Gehäuse erforderlich ist.

### Zusammenfassung der Erfindung:

Die Aufgabe der Erfindung wird bereits durch einen Sensor sowie durch ein Verfahren zum Einleiten eines Teach-in-Vorgangs nach einem der unabhängigen Ansprüche gelöst.

Bevorzugte Ausführungsformen und Weiterbildungen der Erfindung sind den jeweiligen Unteransprüchen zu entnehmen.

Die Erfindung betrifft einen Sensor.

Es handelt sich dabei insbesondere um einen optischen, ultraschall-, kapazitiven oder induktiven Sensor. Es kann sich des Weiteren sowohl um einen analogen Sensor als auch um einen Schwellwertschalter handeln. Beispielsweise kann die Erfindung optische Abstandssensoren, Näherungsschalter, Füllstandsgeber und Drehgeber betreffen.

Der Sensor umfasst ein Gehäuse mit einem in dem Gehäuse angeordneten Teach-in-Schalter und eine Anzeigeeinrichtung zur optischen Anzeige eines Betriebszustandes. Das Gehäuse kann beliebig ausgebildet sein.

Unter einem Gehäuse wird auch eine Anordnung verstanden, bei welcher die Sensorkomponenten in einer Vergussmasse eingebettet sind, welche in diesem Fall das Gehäuse bildet.

Der Aufbau eines derartigen Gehäuses aus Vergussmasse und dessen Herstellung sind in der europäischen Patentanmeldung "Sensoraufbau ohne Gehäuse" vom 19. November 2009 mit der Anmeldenummer 09 014 449 beschrieben. Auf den Offenbarungsgehalt dieses Dokumentes einschließlich des dort beschriebenen Sensoraufbaus und des Herstellungsverfahrens wird hiermit vollumfänglich Bezug genommen. Eine Kopie dieses Dokumentes liegt den Anmeldeunterlagen anbei.

Bei der optischen Anzeigeeinrichtung handelt es sich üblicherweise um eine LED, es versteht sich aber, dass auch andere Anzeigeeinrichtungen genutzt werden können.

Bei eingeleitetem Teach-In-Modus kann über die optische Anzeige, beispielsweise über eine Blinkfrequenz oder über eine bestimmte Lichtfarbe, insbesondere bei Verwendung verschiedenfarbiger LEDs, angezeigt werden, dass der Sensor in einem Teach-In-Modus ist und/oder in welchem Teach-In-Modus sich der Sensor befindet. Über die optische Anzeige kann also ein Betriebszustand des Sensors angezeigt werden.

Gemäß der Erfindung ist als Teach-In-Schalter ein induktiver Sensor in dem Gehäuse angeordnet.

Die Erfinder haben herausgefunden, dass über einen derartigen induktiven Schalter, welcher vorzugsweise als Nährungsschalter ausgebildet ist, der Teach-In-Vorgang mittels eines geeigneten Handhabungswerkzeugs berührungslos eingeleitet werden kann. Es kann so auf mechanische Komponenten verzichtet werden. Insbesondere muss das Gehäuse kein Fenster bzw. keine Kappe zur Betätigung des Schalters aufweisen. Es ist somit einfacher, den Sensor hermetisch zu kapseln.

Induktive Sensoren sind dem Fachmann bekannt. Es handelt sich dabei beispielsweise um eine um einen Ferritkern gewickelte Spule, welche Teil eines elektrischen Schwingkreises ist. Bei Annäherung eines leitenden Gegenstandes wird der Schwingkreis verstimmt. So kann ein Schaltsignal generiert werden.

Bei einer bevorzugten Ausführungsform der Erfindung handelt es sich bei dem induktiven Sensor um ein surface mounted device (SMD-Bauteil). Derartige SMD-Bauteile sind preiswert, kompakt und lassen sich gegebenenfalls zusammen mit weiteren elektronischen Komponenten des Sensors auf einer Platine aufbringen.

Insbesondere kann das Auflöten des SMD-Bauteils zusammen mit weiteren Bauteilen des Sensors in einem Arbeitsschritt erfolgen.

Bei einer bevorzugten Ausführungsform der Erfindung geht die Wirkrichtung des Sensors von einer unterschiedlichen Fläche des Sensorgehäuses wie die Wirkrichtung des als induktiver Sensor ausgebildeten Teach-In-Schalters aus. So erfolgt die Einleitung des Teach-In-Vorgangs von einer anderen Richtung als die Wirkrichtung des Sensors selbst. Dies kann in bestimmten Montagesituationen von Vorteil sein. Weiter besteht nicht die Gefahr, dass während des Teach-In-Vorgangs sich das Handhabungswerkzeug noch in der Nähe des Erfassungsbereichs des Sensors befindet.

Bei einer bevorzugten Ausführungsform der Erfindung ist das Gehäuse zumindest in einem dem induktiven Sensor zugewandten Bereich einteilig und geschlossen ausgebildet. Der dem induktiven Sensor gegenüberliegende Gehäuseabschnitt geht somit nahtlos in zumindest einen Teil des restlichen Gehäuses über. Auf ein Fenster oder eine Kappe kann so verzichtet werden.

Insbesondere kann das Gehäuse starr und hermetisch verschlossen ausgebildet sein, es sind keine elastomeren Gehäusekomponenten zum Drücken eines Schalters erforderlich.

Das Gehäuse besteht zumindest vorzugsweise in einem dem induktiven Sensor zugewandten Bereich aus einem dielektrischen Material, insbesondere aus einem Kunststoff, es kann aber auch aus einem nicht permeablen, schlecht leitenden Material, wie z.B Edelstahl bestehen. In letzterem Fall ist die Anforderung an die Spule und somit die Kosten höher.

Vorzugsweise unterscheidet sich die Wirkrichtung des induktiven Sensors von der Wirkrichtung des Sensors selbst. Der Erfassungsbereich des Sensors ist somit in eine andere Richtung ausgerichtet wie der als Schwellwertschalter ausgebildete induktive Sensor.

Insbesondere kann die Wirkrichtung des induktiven Sensors quer, insbesondere senkrecht zur Wirkrichtung des Sensors verlaufen, so dass der Teach-In-Vorgang von der Seite des Sensors eingeleitet werden kann. Es ist aber auch denkbar, dass die Wirkrichtung des induktiven Sensors in die entgegengesetzte Richtung läuft.

Die Erfindung betrifft des Weiteren ein Verfahren zum Einleiten eines Teach-In-Vorgangs bei einem Sensor, insbesondere einem vorstehend beschriebenen Sensor. Der Sensor weist neben den eigentlichen Sensorkomponenten einen induktiven Sensor auf, über welchen mittels Annäherung eines Handhabungswerkzeugs ein Teach-In-Vorgang eingeleitet wird. Insbesondere kann als Handhabungswerkzeug ein herkömmlicher Schraubendreher verwendet werden.

Bei einer Weiterbildung der Erfindung können zumindest zwei verschiedene Teach-In-Zustände über die Dauer der Annäherung oder eine bestimmte Anzahl an Wiederholungen einer Annäherung eingestellt werden.

Vorzugsweise wird der Teach-In-Zustand über ein Lichtsignal einer Anzeigeeinrichtung optisch angezeigt. Dies kann beispielsweise durch eine unterschiedliche Blinkfrequenz erfolgen. Auch ist denkbar, die verschiedenen Modi durch eine unterschiedliche Lichtfarbe anzuzeigen, beispielsweise unter Verwendung einer RGB-LED.

### Beschreibung der Zeichnungen

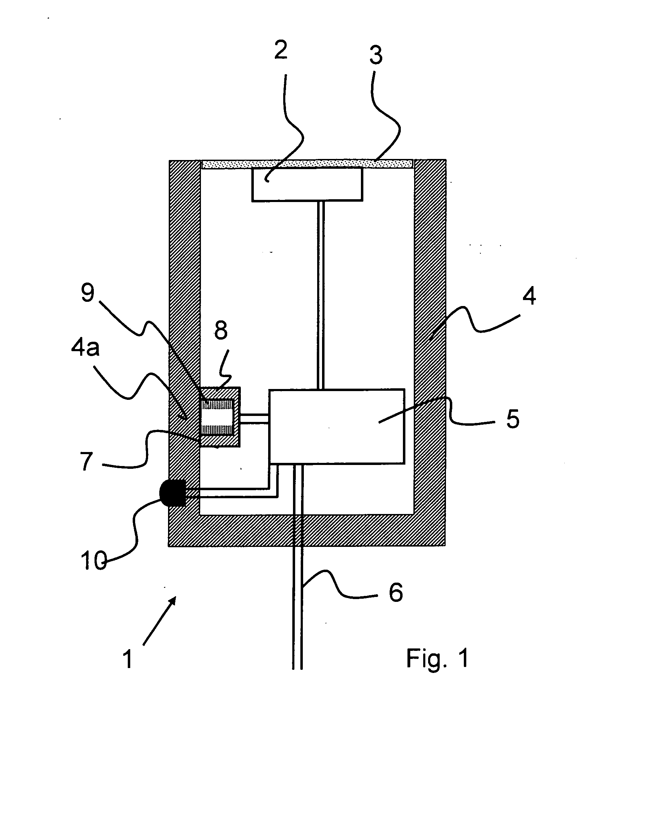

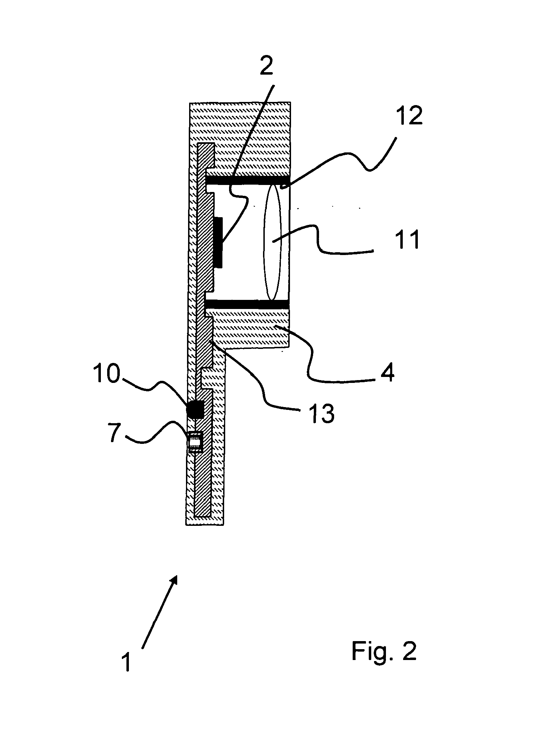

Die Erfindung soll im Folgenden anhand schematisch dargestellter Ausführungsbeispiele Bezug nehmend auf die Zeichnungen Fig. 1 und Fig. 2 näher erläutert werden.

Fig. 1 zeigt eine erste Ausführungsform eines Sensors 1.

Der Sensor 1 umfasst ein im Wesentlichen topfförmiges Gehäuse 4, welches stirnseitig ein Fenster 3 umfasst, hinter welchem eine Erfassungseinheit 2 angeordnet ist. Die Erfindung betrifft alle möglichen Arten von Sensoren. Bei der Erfassungseinheit 2 kann es sich beispielsweise um Komponenten eines kapazitiv oder induktiv arbeitenden Nährungsschalters oder um eine Fotodiode oder einen CCD-Flächensensor handeln. Es versteht sich, dass bei nicht optischen Sensoren auf das Fenster 3 verzichtet werden kann.

Die Erfassungseinheit 2 ist mit einem integrierten Schaltkreis 5 verbunden. Weiter sind Anschlussleitungen 6 aus dem Sensorgehäuse 4 geführt, über welche der Sensor 1 angeschlossen wird.

Zur Einleitung eines Teach-In-Modus umfasst der Sensor einen als Teach-In-Schalter ausgebildeten induktiven Sensor 7. Der induktive Sensor 7 umfasst einen Ferritkern 8 sowie eine darin angeordnete Spule 9 über die zusammen mit weiteren elektronischen Komponenten (nicht dargestellt), welche sich beispielsweise auch im integrierten Schaltkreis 5 befinden können, einen Schwingkreis bildet.

Bei Annäherung eines leitenden, insbesondere eines metallischen Gegenstandes (nicht dargestellt), wird der Schwingkreis verstimmt, so dass ein Signal zum Einleiten eines Teach-In-Vorgangs generiert werden kann.

Der eingeleitete Teach-In-Modus wird über eine Anzeigeeinrichtung 9, insbesondere eine LED dem Benutzer angezeigt. Dabei können je nach Ausführungsform auch verschiedene Teach-In-Modi durch eine unterschiedliche Blinkfrequenz oder durch eine unterschiedliche Lichtfarbe angezeigt werden.

Der dem induktiven Sensor 7 gegenüberliegende Gehäuseabschnitt 4a geht nahtlos in das restliche Gehäuse 4 über, ist somit mit dem angrenzendem Gehäuse einteilig und geschlossen ausgebildet.

Die Erfindung ermöglicht so eine einfachere Ausgestaltung des Gehäuses 4, wobei insbesondere die Dichtigkeit des Gehäuses verbessert werden kann. Weiter kann auf mechanische Komponenten vollständig verzichtet werden.

Fig. 2 zeigt eine alternative Ausführungsform eines Sensors 1, bei welchem das Gehäuse aus einer Vergussmasse 4 besteht. Bei dieser Ausführungsform sind alle wesentlichen Komponenten des Sensors, insbesondere die Erfassungseinheit 2, als SMD-Bauteile auf einer Platine 13 angeordnet.

Es handelt sich in diesem Ausführungsbeispiel um einen optischen Sensor bei dem gegenüber der Erfassungseinheit eine Linse 11 mittels eines Linsenträgers 12 auf die Platine 13 aufgesetzt und vergossen wurde.

Auf der gegenüberliegenden Seite der Erfassungseinheit 2 sind auf der Platine ein als SMD-Bauteil ausgebildeter induktiver Sensor 7 sowie eine Anzeigeeinrichtung 10 vorgesehen. Auch die Anzeigeeinrichtung 10 und der induktive Sensor 7 sind zusammen mit der Platine 13 vergossen. Bei Verwendung einer transparenten Vergussmasse kann auf ein Fenster vor der Anzeigeeinrichtung 10 verzichtet werden.

Durch die Erfindung wurde die Einbettung eines Teach-In-Schalters in einem Sensorgehäuse wesentlich vereinfacht.

### Bezugszeichenliste

- 1.: Sensor
- 2.: Erfassungseinheit
- 3.: Fenster
- 4.: Gehäuse
- 4a: Gehäuse, Abschnitt
- 5.: integrierter Schaltkreis
- 6.: Anschlussleitung
- 7.: induktiver Sensor
- 8.: Ferritkern
- 9.: Spule
- 10.: Anzeigeeinrichtung
- 11.: Linse
- 12.: Linsenträger
- 13.: Platine

## Patentansprüche

1. Sensor, umfassend ein Gehäuse, ein in dem Gehäuse angeordeten Teach-In-Schalter sowie eine Anzeigeeinrichtung zur optischen Anzeige eines Betriebszustandes, insbesondere eines Teach-In-Betriebszustandes,
**dadurch gekennzeichnet, dass** als Teach-In-Schalter ein induktiver Sensor in dem Gehäuse angeordnet ist.

2. Sensor nach dem vorstehenden Anspruch, **dadurch gekennzeichnet, dass** es sich bei dem induktiven Sensor um einen SMD-Sensor handelt.

3. Sensor nach einem der vorstehenden Ansprüche, **dadurch gekennzeichnet, dass** das Gehäuse des Sensors zumindest abschnittsweise aus einer Vergussmasse besteht.

4. Sensor nach dem vorstehenden Anspruch, **dadurch gekennzeichnet, dass** es sich bei dem Sensor um einen optischen, Ultraschall-, kapazitiven oder induktiven Sensor handelt.

5. Sensor nach einem der vorstehenden Ansprüche, **dadurch gekennzeichnet, dass** die Wirkrichtung des Sensors von einer unterschiedlichen Fläche des Sensorgehäuses wie die Wirkrichtung des als induktiver Sensor ausgebildeten Teach-In-Schalters ausgeht.

6. Sensor nach einem der vorstehenden Ansprüche, **dadurch gekennzeichnet, dass** das Gehäuse zumindest in einem dem induktiven Sensor zugewandten Bereich einteilig und geschlossen ausgebildet ist.

7. Sensor nach einem der vorstehenden Ansprüche, **dadurch gekennzeichnet, dass** das Gehäuse starr und hermetisch verschlossen ausgebildet ist.

8. Sensor nach einem der vorstehenden Ansprüche, **dadurch gekennzeichnet, dass** das Gehäuse zumindest in einem dem induktiven Sensor zugewandten Bereich aus einem dielektrischen Material oder einem nicht permeablen Material mit schlechter Leitfähigkeit, insbesondere Edelstahl, besteht.

9. Sensor nach einem der vorstehenden Ansprüche, **dadurch gekennzeichnet, dass** sich die Wirkrichtung des induktiven Sensors von der Wirkrichtung des Sensors unterscheidet.

10. Sensor nach dem vorstehenden Anspruch, **dadurch gekennzeichnet, dass** die Wirkrichtung des induktiven Sensors quer, insbesondere senkrecht, zur Wirkrichtung des Sensors verläuft.

11. Sensor nach einem der vorstehenden Anspruche, **dadurch gekennzeichnet, dass** der induktive Sensor als SMD-Bauteil auf einer Platine des Sensors angeordnet ist.

12. Verfahren zum Einleiten eines Teach-In-Vorgangs bei einem Sensor, insbesondere eines Sensors nach einem der vorstehenden Ansprüche, wobei der Sensor einen induktiven Sensor aufweist, über welchen mittels Annäherung eines Handhabungswerkzeugs ein Teach-In-Vorgang ausgelöst wird.

13. Verfahren zum Einleiten eines Teach-In-Vorgangs nach dem vorstehenden Anspruch, **dadurch gekennzeichnet, dass** als Handhabungswerkzeug ein Werkzeug aus einem leitfähigen Material, insbesondere ein Schraubendreher, verwendet wird.

14. Verfahren zum Einleiten eines Teach-In-Vorgangs nach einem der vorstehenden Ansprüche, **dadurch gekennzeichnet, dass** zumindest zwei verschiedene Teach-In-Zustände über die Dauer der Annäherung und/oder eine bestimmte Anzahl an Wiederholungen einer Annäherung eingestellt werden.

15. Verfahren zum Einleiten eines Teach-In-Vorgangs nach dem vorstehenden Anspruch, **dadurch gekennzeichnet, dass** der Teach-In-Zustand über ein Lichtsignal einer Anzeigeeinrichtung optisch angezeigt wird.
